# EUROPÄISCHE PATENTSCHRIFT

(11) **EP 3 807 697 B1**
(45) Veröffentlichungstag und Bekanntmachung des Hinweises auf die Patenterteilung: **03.09.2025**
(21) Anmeldenummer: 19731933.8
(22) Anmeldetag: 13.06.2019
(51) Int. Cl.: G02B 27/00, G02B 27/01, B60K 35/10, B60K 35/231, B60K 35/60

(54) **VERFAHREN ZUM ENTWERFEN EINES OPTISCHEN VERZERRELEMENTS FÜR EIN GERÄT ZUM ERZEUGEN EINES VIRTUELLEN BILDES**
METHOD OF DESIGN OF A DISTORTION ELEMENT FOR AN APPARATUS FOR GENERATING A VIRTUAL IMAGE
MÉTHODE DE CONCEPTION D'UN ÉLÉMENT DE DISTORSION POUR UN APPAREIL POUR LA GÉNÉRATION D'UNE IMAGE VIRTUELLE

(30) Priorität: 15.06.2018 DE 102018209631
(43) Veröffentlichungstag der Anmeldung: 21.04.2021
(73) Patentinhaber: Continental Automotive Technologies GmbH, 30175 Hannover (DE)
(72) Erfinder: JACHENS, Arne, 65824 Schwalbach a. Ts. (DE); MITSCH, Rudolf, 65824 Schwalbach a. Ts. (DE)
(74) Vertreter: Aumovio Corporation
(86) Internationale Anmeldenummer: PCT/EP2019/065622
(87) Internationale Veröffentlichungsnummer: WO 2019/238896

(56) Entgegenhaltungen:
- WO-A1-2007/000178
- WO-A1-2010/051979
- US-A1- 2017 315 350

## Beschreibung

Die vorliegende Erfindung betrifft ein Verfahren zum Entwerfen eines optischen Verzerrelements für ein Gerät zum Generieren eines virtuellen Bildes.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Bei einem auf einem Lichtwellenleiter basierenden Head-Up-Display wird mit einem Kompensationselement, beispielsweise einer Linse oder einem Hologramm, der Vergrößerungseffekt und gegebenenfalls eine Bildverzerrung durch die Windschutzscheibe kompensiert beziehungsweise berücksichtigt, wenn ein virtuelles Bild bei einer endlichen bis unendlichen Projektionsdistanz erzeugt werden soll.

In einer platzsparenden Ausführung wird das Kompensationselement als zusätzliches Hologramm im Lichtwellenleiter realisiert. Es kann aber auch als separates optisches Element umgesetzt werden. Herkömmlich wird für jede Fahrzeugvariante und somit für jede Windschutzscheibenkrümmung eine spezifische optische Lösung entwickelt. Je nach Ausführung muss ein entsprechendes Element zur optischen Kompensation individuell gefertigt werden, die Produktionsanlagen müssen entsprechend umgerüstet werden. Ein solches für eine erste Fahrzeugvariante produziertes Head-Up-Display kann nicht in einer zweiten Fahrzeugvariante verbaut werden. Hiermit einher gehen Logistik- und Lagerkosten.

In diesem Zusammenhang ist es aus der WO 2007/000178 A1 bekannt, statisch vorhersehbare Bildfehlerquellen, beispielsweise hervorgerufen durch unterschiedliche Wölbung der Windschutzscheibe bei unterschiedlichen Fahrzeugtypen, durch entsprechend konfigurierte optische Elemente weitgehend zu kompensieren. Für jeden Fahrzeugtyp ist dazu ein speziell konfiguriertes optisches Element vorgesehen. Unvorhergesehene Bildfehlerquellen können sich aus Fertigungs- und

Einbautoleranzen ergeben. Diese können durch eine nachträgliche Feinpositionierung er optischen Elemente behoben werden, was aber aufwendig ist. In diesem Dokument wird daher vorgeschlagen, dass eine Recheneinheit für jedes einzelne Fahrzeug, in das ein Head-Up-Display montiert wurde, die aufgrund unvorhersehbarer Bildfehlerquellen vorhandenen Bildfehler einzeln misst und abhängig davon Verzerrungsparameter berechnet und an einen Bildsignalverzerrer übergibt.

WO 2010/051979 A1 beschreibt ein Fahrzeuganzeigesystem mit einer Anzeigeeinrichtung und mit einem optischen System zur Erzeugung eines für einen Benutzer virtuellen Bildes. Das optische System weist wenigstens ein zur Positionsveränderung des virtuellen Bildes ein-stellbares Element auf. Für eine nach Durchlaufen des optischen Systems erfolgende Darstellung des virtuellen Bildes in verzerrungsreduzierter Form ist eine Verzerrung der Bildinformation mittels eines Korrekturmittels vorgesehen. Dabei ist die Verzerrung in Abhängigkeit der Einstellung des einstellbaren Elements vorgesehen.

US 2017/0315350 A1 beschreibt eine Windschutzscheibe für ein Kraftfahrzeug. Die Windschutzscheibe ist derart ausgestaltet, dass innerhalb eines HUD-Anzeigebereichs eine Variation der Krümmung der Windschutzscheibe einen festgelegten Wert nicht überschreitet. Die Krümmung nimmt zumindest innerhalb des HUD-Anzeigebereichs vorzugsweise monoton von einer unteren Seite zu einer oberen Seite zu.

Es ist eine Aufgabe der vorliegenden Erfindung, ein verbessertes Verfahren zum Entwerfen eines optischen Verzerrelements für ein Gerät zum Generieren eines virtuellen Bildes vorzuschlagen, das auf einfache Weise an verschiedene Fahrzeugtypen anpassbar ist.

Diese Aufgabe wird durch ein Verfahren mit den Merkmalen des Anspruchs 1 gelöst.

Gemäß einem ersten Aspekt der Erfindung umfasst ein Verfahren zum Entwerfen eines optischen Verzerrelements für ein Gerät zum Generieren eines virtuellen Bildes die Schritte:
- Messen von Krümmungen von Windschutzscheiben für eine Vielzahl von unterschiedlichen Fahrzeugtypen, die vom Gerät zum Generieren eines virtuellen Bildes als Spiegeleinheit genutzt werden;
- Ermitteln einer durchschnittlichen Krümmung aus den gemessenen Krümmungen; und
- Bestimmen einer Kompensationskrümmung für das optische Verzerrelement, die geeignet ist, die ermittelte durchschnittliche Krümmung zu kompensieren.

Auf Grundlage der nach dem beschriebenen Verfahren bestimmten Kompensationskrümmung wird dann ein optisches Verzerrelement erstellt.

Gemäß einem weiteren Aspekt der Erfindung weist ein Gerät zum Generieren eines virtuellen Bildes, das für eine Verwendung in einer Vielzahl von unterschiedlichen Fahrzeugtypen geeignet ist, auf:
- eine bildgebende Einheit zum Erzeugen eines Bildes;
- eine Optikeinheit, die eingerichtet ist, ein von der bildgebenden Einheit erzeugtes Bild auf eine als Spiegeleinheit genutzte Windschutzscheibe zu projizieren, wobei die Optikeinheit ein nach dem erfindungsgemäßen Verfahren entworfenes optisches Verzerrelement aufweist, das eine Verzerrung bewirkt, die eine aus gemessenen Krümmungen von Windschutzscheiben einer Vielzahl von unterschiedlichen Fahrzeugtypen ermittelte durchschnittliche Krümmung kompensiert; und
- einen Bildsignalverzerrer, der eingerichtet ist, die bildgebende Einheit so anzusteuern, dass das von der bildgebenden Einheit erzeugte Bild in Abhängigkeit von der Ausgestaltung der Windschutzscheibe mit vom Fahrzeugtyp abhängigen Parametern verzerrt ist.

Üblicherweise ist die Ausgestaltung der gekrümmten Spiegeleinheit durch einen Typ eines Fortbewegungsmittels bestimmt. Bei der erfindungsgemäßen Lösung ist dennoch nur ein einziger Typ optisches Verzerrelement für alle oder zumindest viele unterschiedliche Fahrzeugtypen erforderlich. Dieser findet in großer Stückzahl Verwendung, wodurch er kostengünstig ist. Eine Anpassung an die unterschiedlichen Fahrzeugtypen findet mittels einer elektronischen Bildverzerrung statt, die auf den jeweiligen Fahrzeugtyp angepasst ist. Dafür müssen lediglich für jeden Fahrzeugtyp einmalig die Parameter für die elektronische Bildverzerrung ermittelt werden. Dies vereinfacht die Entwicklung von Head-Up-Displays für unterschiedliche Fahrzeugtypen und reduziert die erforderliche Produktionszeit. Mittlerweile sind die Produktionstoleranzen oftmals so gering, dass eine zusätzliche Kalibrierung für jedes einzelne Fahrzeug entbehrlich ist. Mit anderen Worten wird bei einem Head-Up-Display erfindungsgemäß eine universelle Optikeinheit genutzt. Eine Anpassung an Fahrzeugvarianten erfolgt mittels einer Bildverzerrung durch Software oder andere Formen elektronischer Bildbearbeitung.

Erfindungsgemäß ist die vom optischen Verzerrelement bewirkte Verzerrung an eine durchschnittliche Form der als Spiegeleinheit genutzten Windschutzscheibe angepasst. Dadurch wird erreicht, dass die verbleibende zu kompensierende Krümmung relativ klein ist, so dass die erforderliche Verzerrung durch den Bildsignalverzerrer in einem überschaubaren Rahmen bleibt. Bei großen Verzerrungen könnte es andernfalls zu Einschränkungen bei der erreichbaren effektiven Bildauflösung kommen.

Gemäß einem Aspekt der Erfindung ist das optische Verzerrelement eine Linse, ein Gitter, ein Hologramm, ein Fresnelobjekt oder ein Spiegel. Mit allen genannten Typen von optischen Verzerrelementen lässt sich die erfindungsgemäße Lösung realisieren. Welcher Typ Verzerrelement für ein konkretes Head-Up-Display Anwendung findet, liegt im Ermessen des Fachmanns und kann beispielsweise durch den verfügbaren Bauraum oder den Aufbau der Optikeinheit beeinflusst sein.

Gemäß einem Aspekt der Erfindung weist das Gerät einen Lichtwellenleiter zum Aufweiten einer Austrittspupille auf. Das optische Verzerrelement ist dabei als in den Lichtwellenleiter integriertes Gitter oder Hologramm realisiert. Die erfindungsgemäße Lösung ist besonders vorteilhaft für Head-Up-Displays, die auf Lichtwellenleitertechnologie basieren. Bei diesen hat die Wölbung der Spiegeleinheit aufgrund der Größe der Eyebox einen ausgeprägteren Einfluss als bei herkömmlichen Head-Up-Displays, so dass der Kompensation der Krümmung eine größere Bedeutung zukommt. Die Integration des optischen Verzerrelements in den Lichtwellenleiter ist insbesondere dann vorteilhaft, wenn das integrierte Gitter oder das integrierte Hologramm mittels eines Masters hergestellt werden, der zwar in der Erstellung zeit- und oder kostenintensiv ist, aber für eine große Anzahl von Gittern beziehungsweise Hologrammen geeignet ist. Bei Gittern handelt es sich beim Master beispielsweise um eine Abgussform, bei Hologrammen beispielsweise um ein Negativ, durch welches hindurch belichtet wird. Durch die Integration wird zudem die geometrische Abmessung des Lichtwellenleiters nicht geändert, so dass kein zusätzlicher Bauraum benötigt wird.

Gemäß einem Aspekt der Erfindung ist der Bildsignalverzerrer eingerichtet, eine Betrachterposition eines Nutzers bei der Ansteuerung der bildgebenden Einheit zu berücksichtigen. Die Betrachterposition kann beispielsweise durch Head-Tracking mittels einer Kamera ermittelt werden. Die ebenfalls vom Fahrzeugtyp abhängigen Verzerrungen des virtuellen Bildes, die vom Fahrer bei Bewegung des Kopfes innerhalb der Eyebox oder bei Verstellung der Eyebox wahrgenommen werden, kann durch eine Berücksichtigung der Betrachterposition kompensiert werden. Eine Kamera bestimmt dazu die Position des Fahrerkopfes mittels Headtracking. Diese Information wird dazu verwendet, ein speziell vorverzerrtes Bild anzuzeigen, das in Kombination mit der fahrzeugspezifischen Windschutzscheibe ein verzerrungsfreies virtuelles Bild ergibt.

Vorzugsweise wird ein erfindungsgemäßes Gerät in einem Fortbewegungsmittel eingesetzt, um ein virtuelles Bild für einen Bediener des Fortbewegungsmittels zu erzeugen. Bei dem Fortbewegungsmittel kann es sich beispielsweise um ein Kraftfahrzeug oder ein Luftfahrzeug handeln.

Weitere Merkmale der vorliegenden Erfindung werden aus der nachfolgenden Beschreibung und dem angehängten Anspuch in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch eine erste Ausführungsform eines erfindungsgemäßen Head-Up-Displays;
- Fig. 6: zeigt schematisch eine zweite Ausführungsform eines erfindungsgemäßen Head-Up-Displays;
- **Fig.** 7: veranschaulicht unterschiedliche Wölbungen der Windschutzscheiben bei unterschiedlichen Fahrzeugtypen; und
- **Fig.** 8: zeigt schematisch ein Designverfahren für ein Verzerrelement.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

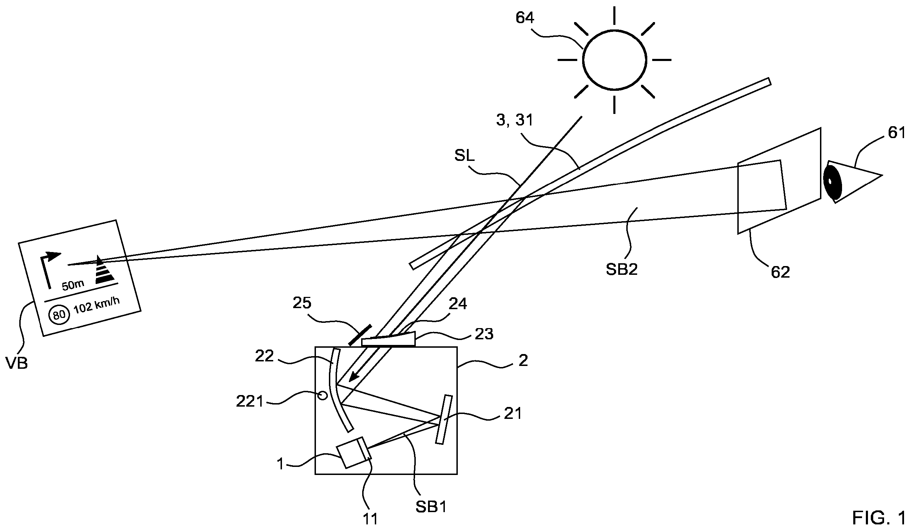

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodass das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

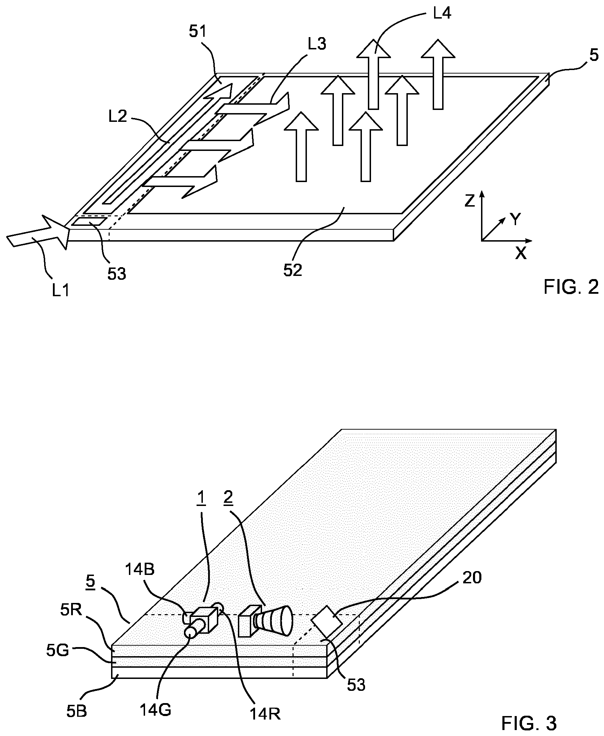

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

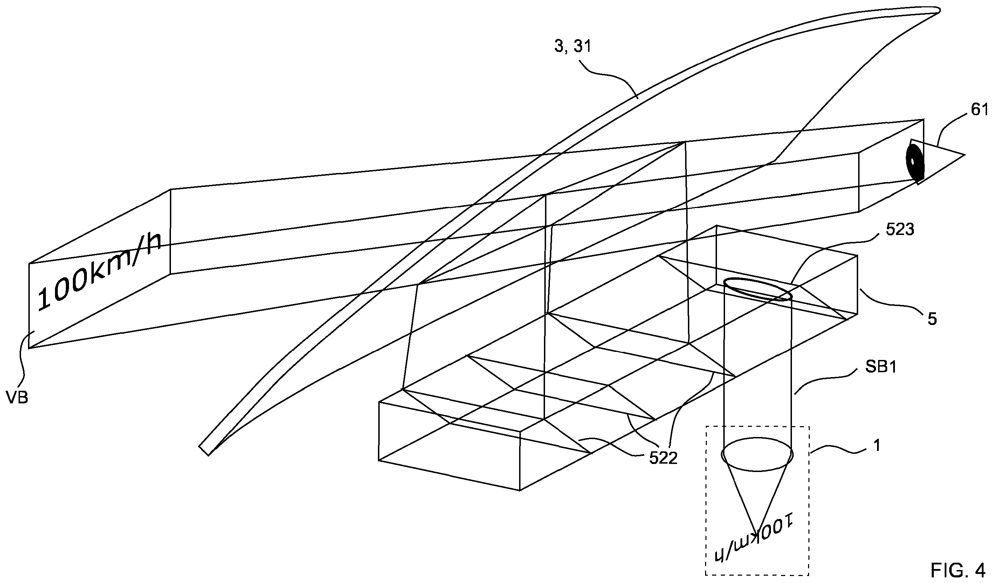

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

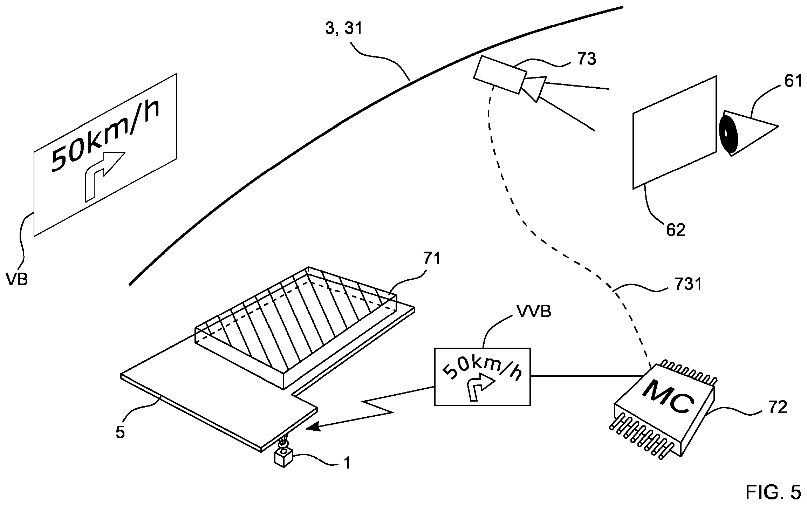

Fig. 5 zeigt schematisch eine erste Ausführungsform eines erfindungsgemäßen Head-Up-Displays, bei der ein Lichtwellenleiter 5 wie zuvor beschrieben zum Einsatz kommt. Als optisches Verzerrelement 71 dient hier ein auf dem Lichtwellenleiter 5 angeordnetes Hologramm. In einer hier nicht dargestellten Variante ist das optische Verzerrelement ein mit dem Auskoppelhologramm kombiniertes beziehungsweise in dieses integriertes Hologramm. In diesem Fall wird die geometrische Abmessung des Lichtwellenleiters 5 nicht geändert, zusätzlicher Bauraum ist somit nicht erforderlich. Ein Bildsignalverzerrer 72 erzeugt ein elektronisch vorverzerrtes Bild VVB, welches von der bildgebenden Einheit 1 in den Lichtwellenleiter 5 optisch eingekoppelt, dort zweidimensional vervielfacht und mit vergrößerter Ausgangspupille in Richtung der als Spiegelelement 3 dienenden Windschutzscheibe 31 geleitet wird. Vom optischen Verzerrelement 71 wird es zusätzlich optisch vorverzerrt. Von der Windschutzscheibe wird das Bild Richtung Auge 61 geworfen und vom Betrachter als verzerrungsfreies virtuelles Bild VB wahrgenommen.

Gemäß einer Variante wird die Position des Auges 61 von einer Kamera 73 detektiert und die detektierte Position mittels einer hier gestrichelt dargestellten Datenanbindung 731 an den Bildsignalverzerrer 72 geleitet. Dieser berechnet dann eine weitere, von der Augenposition abhängige Verzerrung, die zusätzlich zur statischen, vom Fahrzeugtyp abhängigen Verzerrung angewendet wird.

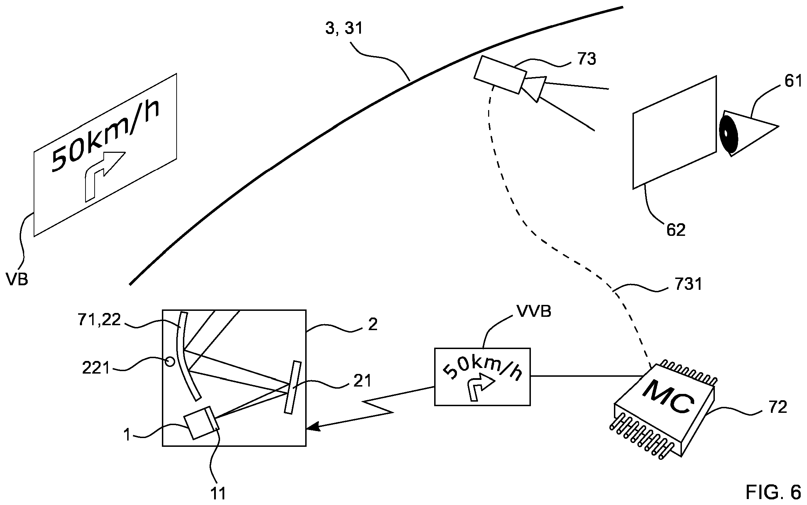

Fig. 6 zeigt schematisch eine zweite Ausführungsform eines Head-Up-Displays. Dieses beruht auf herkömmlicher Technik. Als optisches Verzerrelement 71 dient hier der gekrümmte Spiegel 22 der Optikeinheit 2. Wie zuvor erzeugt ein Bildsignalverzerrer 72 ein elektronisch vorverzerrtes Bild VVB, welches von der Optikeinheit 2 in Richtung der als Spiegelelement 3 dienenden Windschutzscheibe 31 geleitet wird. Vom gekrümmten Spiegel 22 wird es zusätzlich optisch vorverzerrt. Von der Windschutzscheibe wird das Bild Richtung Auge 61 geworfen und vom Betrachter als verzerrungsfreies virtuelles Bild VB wahrgenommen.

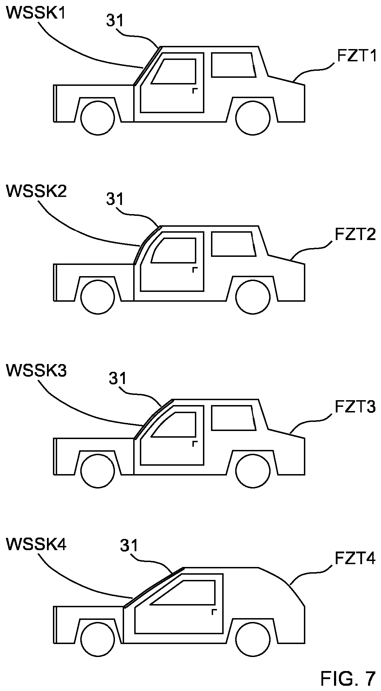

Wie schon in der Ausführungsform aus Fig. 5 kann die Position des Auges 61 von einer Kamera 73 detektiert und die detektierte Position mittels einer hier gestrichelt dargestellten Datenanbindung 731 an den Bildsignalverzerrer 72 geleitet werden. Dieser berechnet dann eine von der Augenposition abhängige zusätzliche Verzerrung, die neben der statischen, vom Fahrzeugtyp abhängigen Verzerrung angewendet wird. Fig. 7 veranschaulicht unterschiedliche Wölbungen der Windschutzscheiben 31 bei unterschiedlichen Fahrzeugtypen.

Dargestellt sind vier unterschiedliche Fahrzeugtypen FZT1 bis FZT4, deren Windschutzscheiben 31 eine jeweils andere Form und somit eine andere Krümmung WSSK1 bis WSSK4 aufweisen. Aus diesen wird erfindungsgemäß eine mittlere Krümmung ermittelt. Das im Head-Up-Display verbaute optische Verzerrelement weist eine Kompensationskrümmung auf, die dafür ausgelegt ist, diese mittlere Krümmung zu kompensieren.

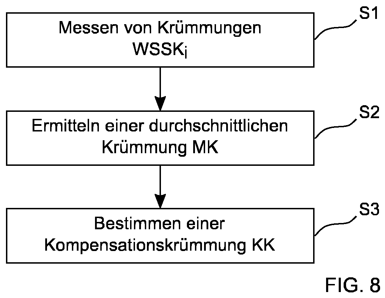

Fig. 8 zeigt schematisch ein Designverfahren für ein Verzerrelement. In einem ersten Schritt S1 werden Krümmungen WSSK1 bis WSSK4 von Spiegeleinheiten für eine Vielzahl von Typen FZT1 bis FZT4 eines Fortbewegungsmittels gemessen. Aus den gemessenen Krümmungen WSSK1 bis WSSK4 wird dann eine durchschnittliche Krümmung MK ermittelt S2. Schließlich wird eine Kompensationskrümmung KK für das optische Verzerrelement bestimmt S3, die geeignet ist, die ermittelte durchschnittliche Krümmung MK zu kompensieren.

### Bezugszeichenliste

- 1: Bildgenerator/Bildgebende Einheit
- 11: Anzeigeelement
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie
- 25: Blendschutz

- 3: Spiegeleinheit
- 31: Windschutzscheibe

- 5: Lichtwellenleiter
- 51: Falthologramm
- 52: Auskoppelhologramm
- 521: Auskoppelbereich
- 522: Spiegelebene
- 523: Spiegelebene
- 53: Einkoppelhologramm
- 531: Einkoppelbereich

- 61: Auge/ Betrachter
- 62: Eyebox
- 64: Störlichtquelle

- 71: Verzerrelement
- 72: Bildsignalverzerrer
- 73: Kamera
- 731: Datenanbindung

- FZT1... FZT4: Fahrzeugtyp
- KK: Kompensationskrümmung
- L1...L4: Licht
- MK: mittlere Krümmung
- SB1, SB2: Strahlenbündel
- SL: Sonnenlicht
- VB: Virtuelles Bild
- VVB: Vorverzerrtes Bild
- WSSK1... WSSK4: Krümmung

## Patentansprüche

1. Verfahren zum Entwerfen eines optischen Verzerrelements (71) für ein Gerät zum Generieren eines virtuellen Bildes (VB), mit den Schritten:
- Messen (S1) von Krümmungen (WSSK1-WSSK4) von Windschutzscheiben (3, 31) für eine Vielzahl von unterschiedlichen Fahrzeugtypen (FZT1-FZT4), die vom Gerät zum Generieren eines virtuellen Bildes (VB) als Spiegeleinheit (3, 31) genutzt werden;
- Ermitteln (S2) einer durchschnittlichen Krümmung (MK) aus den gemessenen Krümmungen (WSSK1-WSSK4); und
- Bestimmen (S3) einer Kompensationskrümmung (KK) für das optische Verzerrelement (71), die geeignet ist, die ermittelte durchschnittliche Krümmung (MK) zu kompensieren.

## Claims

1. Method for designing an optical distortion element (71) for a device for generating a virtual image (VB), having the steps of:
- measuring (S1) curvatures (WSSK1-WSSK4) of windscreens (3, 31) for a multiplicity of different vehicle types (FZT1-FZT4), which are used by the device for generating a virtual image (VB) as a mirror unit (3, 31);
- ascertaining (S2) an average curvature (MK) from the measured curvatures (WSSK1-WSSK4); and
- determining (S3) a compensation curvature (KK) for the optical distortion element (71), which is suitable for compensating for the average curvature (MK) ascertained.

## Revendications

1. Procédé de conception d'un élément de distorsion optique (71) pour un appareil destiné à générer une image virtuelle (VB), comprenant les étapes consistant à :
- mesurer (S1) des courbures (WSSK1-WSSK4) de pare-brises (3, 31) pour une pluralité de types de véhicules différents (FZT1-FZT4), lesquels sont utilisés comme unité miroir (3, 31) par l'appareil destiné à générer une image virtuelle (VB) ;
- déterminer (S2) une courbure moyenne (MK) à partir des courbures mesurées (WSSK1-WSSK4) ; et
- définir (S3) une courbure de compensation (KK) pour l'élément de distorsion optique (71), laquelle est apte à compenser la courbure moyenne (MK) déterminée.
